# EUROPEAN PATENT SPECIFICATION

(11) **EP 4 174 516 B1**
(45) Date of publication and mention of the grant of the patent: **16.09.2026**
(21) Application number: 21204673.4
(22) Date of filing: 26.10.2021
(51) Int. Cl.: G01S 7/40, G01S 7/02, G01S 13/931, G01S 13/34, G01S 13/00, G01S 13/44, H01Q 25/00, H01Q 3/26, H01Q 21/06, H01Q 3/34, H01Q 1/32, G01S 13/02

(54) **RADAR TRANSCEIVER CALIBRATION**
KALIBRIERUNG EINES RADAR-SENDEEMPFÄNGERS
ÉTALONNAGE D'ÉMETTEUR-RÉCEPTEUR DE RADAR

(43) Date of publication of application: 03.05.2023
(73) Proprietor: Magna Electronics Sweden AB, 447 37 Vårgårda (SE)
(72) Inventor: GEISSLER, Simon, Niederwerrn (DE); POIGER, Walter, Niederwerrn (DE); KLOTZBUECHER, Dirk, Niederwerrn (DE); TROMPETER, Florian, Niederwerrn (DE)
(74) Representative: Westpatent AB

(56) References cited:
- WO-A1-2012/089385
- DE-A1- 102014 014 864
- US-A1- 2016 209 504
- US-A1- 2020 249 344

## Description

The present disclosure relates to radar transceivers and in particular to installation of radar transceivers in vehicles.

A radar transceiver is a device arranged for transmission and reception of radar signals in a radar frequency band. Radar transceivers are commonly used in vehicles for monitoring vehicle surroundings. Automatic Cruise Control (ACC) functions, Emergency Braking (EB) functions, Advanced Driver Assistance Systems (ADAS) and Autonomous Drive (AD) are some examples of applications where radar data represents an important source of information on which vehicle control may be based. Some radar transceivers are placed in vehicle rear corners and are also used for Blind Spot Monitoring (BSM) and Automatic Lane Change (ALC) .

Vehicle radar transceivers are often arranged hidden behind vehicle body parts, such as a front or a rear vehicle bumper. This placement is often chosen due to aesthetic reasons, but there is also a need to protect the radar transceiver from mechanical impact, moisture and dirt.

A drawback associated with hiding radar transceivers behind vehicle body parts is that the radar transmission must penetrate the body part in order to monitor the vehicle surroundings. This impacts wave propagation and sensor performance because the second surface material distorts transmitted signals, TX signals, and received signals, RX signals. There can also be mounting effects where the mounting of a radar transceiver affects its performance. This can partly be compensated for by means of calibrating the radar transceiver.

Calibration of radar transceiver is normally time consuming, costly and prone to errors, needing a controlled environment at the end of a vehicle production line.

The document WO 2012/089385 Al discloses a radar sensor for motor vehicles, having an antenna arrangement with at least two groups of antenna elements which differ in elevation and are activated and deactivated alternately. An elevation angle of detected objects is estimated by means of a contrast between radar echoes received by the various groups of antenna elements.

It is an object of the present disclosure to provide an improved radar transceiver calibration process that enables an enhanced normal operation following the calibration process.

This object is achieved by means of a vehicle radar system that comprises a control unit and a radar transceiver that in turn comprises a controllable transmitter antenna arrangement and a receiver antenna arrangement. The control unit is adapted to control the radar transceiver to generate and transmit a radar signal, and to receive a reflected radar signal that corresponds to the transmitted radar signal being reflected by one or more target objects. The control unit is further adapted to control the transmitter antenna arrangement to generate a first antenna radiation pattern for the transmitted radar signal, and to control the transmitter antenna arrangement to generate a plurality of second antenna radiation patterns for the transmitted radar signal.

In a predetermined angular direction with respect to a predefined reference direction, the control unit is further adapted to determine which second antenna radiation pattern that provides the largest amplitude difference between the first antenna radiation pattern and the second antenna radiation patterns, and to choose that second antenna radiation pattern. The calibration process has now been finalized and resulted in the chosen second antenna radiation pattern and a normal running mode is about to start. The control unit is then adapted to control the transmitter antenna arrangement to generate the chosen second antenna radiation pattern and the first antenna radiation pattern in an alternating manner.

This means that an uncomplicated and efficient calibration process is provided, not needing a controlled environment. The present disclosure can be applied to a dual-mode radar system, which applies time-division multiplexing to sense the environment with two different modes, a first mode for the first antenna pattern and a second mode for the chosen second antenna radiation pattern.

According to some aspects, each vehicle radar transceiver is arranged to generate and transmit radar signals in the form of frequency modulated continuous wave (FMCW) signals. The control unit is adapted to control the radar transceiver to transmit the radar signal using the first antenna radiation pattern for a first plurality of FMCW ramps, and to transmit the radar signal using the second antenna radiation pattern for a second plurality of FMCW ramps. Each radar cycle has a duration of a cycle time.

This means that the present disclosure is applicable for the well-known FMCW radar technology.

According to some aspects, one of a first plurality of FMCW ramps and a second plurality of FMCW ramps follow after the other. According to some further aspects, during one or more radar cycles, the chirp signal comprises repeating cycles of the first plurality of frequency ramps and the second plurality of frequency ramps.

This means that the first plurality of FMCW ramps and the second plurality of FMCW ramps can come in any order. This is the case for the calibration process as well as for the normal operation after calibration.

Furthermore, this also means that during the calibration process, one or more sets of a first antenna radiation pattern and one second antenna radiation pattern can be generated in one and the same radar cycle. This can be accomplished in one radar cycle or distributed in several radar cycles. These sets thus result in that the first antenna radiation pattern is repeatedly generated before each second antenna radiation pattern is generated.

According to some aspects, the control unit is adapted to control the transmitter antenna arrangement to generate each second antenna radiation pattern during a certain time interval when transmitting the radar signal.

In this way, a controlled calibration procedure is obtained.

According to some aspects, the control unit is adapted to determine which second antenna radiation pattern provides the largest amplitude difference between the first antenna radiation pattern and the second antenna radiation patterns by further being adapted to measure amplitudes of received reflected radar signals in the predetermined angular direction, and to compare amplitudes of received reflected radar signals that correspond to when the first antenna radiation pattern is used for the transmitted radar signal with amplitudes of received reflected radar signals that correspond to when second antenna radiation patterns are used for the transmitted radar signal. The control unit is then further adapted to determine which second antenna radiation pattern is used when a difference between the compared amplitudes is maximal.

This means that radar targets in the azimuth area of interest, i.e., a field of view or a certain predetermined optimization azimuth angle, are selected, and their received amplitudes are analyzed.

The intention of the comparison is to find an ideal notch position for the chosen second antenna radiation pattern, where this comparison is independent of the targets' reflective properties, since the same selected targets can be used.

According to some aspects, the vehicle radar system comprises at least one transmitter unit, where the transmitter antenna arrangement comprises at least two first transmitter antenna columns, each transmitter antenna column comprising a plurality of antenna elements, and where the transmitter unit is adapted to transmit via the transmitter antenna columns simultaneously.

This enables the transmitter antenna arrangement to be controllable.

Further advantages are obtained by the dependent claims.

There are also disclosed herein methods and vehicles associated with the above-mentioned advantages.

### BRIEF DESCRIPTION OF THE DRAWINGS

The present disclosure will now be described more in detail with reference to the appended drawings, where:
- Figure 1: shows a schematic top view of a vehicle;
- Figure 2: illustrates an FMCW radar signal;
- Figure 3: shows a schematic front view of an antenna arrangement;
- Figure 4: illustrates a first example of antenna radiation patterns;
- Figure 5: illustrates a second example of antenna radiation patterns;
- Figure 6: illustrates a third example of antenna radiation patterns;
- Figure 7: is a flow chart illustrating methods according to the present disclosure;
- Figure 8: schematically illustrates a control unit arrangement; and
- Figure 9: shows a computer program product.

### DETAILED DESCRIPTION

The inventive concept will now be described more fully hereinafter with reference to the accompanying drawings, in which certain embodiments of the inventive concept are shown.

This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

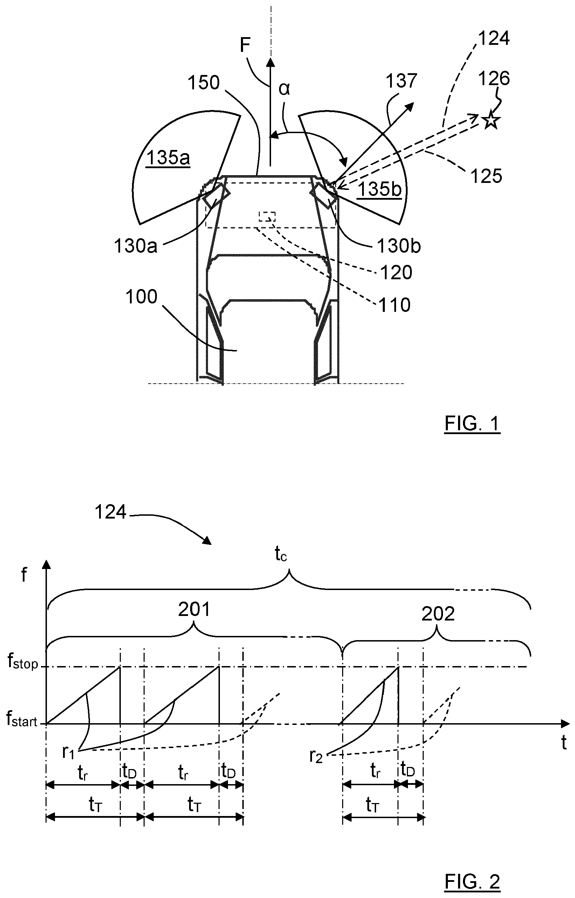

Figure 1 shows a vehicle 100 equipped with a vehicle radar system 110. The radar system 110 comprises a control unit 120 and at least one radar transceiver 130a, 130b, here a first corner radar transceiver 130a and a second corner radar transceiver 130b. There are often more radar transceivers, such as a front center radar transceivers and rear radar transceivers; in this example only the front corner radar transceivers 130a, 130b, are discussed.

The control unit 120 and at least one radar transceiver 130a, 130b may be comprised in a single physical unit or they may be distributed over more than one physical unit.

According to an example, the vehicle radar transceivers 130a, 130b are arranged to generate and transmit radar signals 124 in the form of frequency modulated continuous wave (FMCW) signals, sometimes also referred to as radar chirp signals, and to receive reflected radar signals 125, where the transmitted signals have been reflected by an object 126.

This is illustrated in Figure 2, where the transmitted radar signal 124 is in the form of a chirp signal that comprises ramps r₁, r₂ where the frequency f varies from a first frequency fₛₜₐᵣₜ to a second frequency fₛₜₒₚ over the course of each ramp r₁, r₂, where the value of the first frequency fₛₜₐᵣₜ falls below the value of the second frequency fₛₜₒₚ. For a radar cycle, the chirp signal 124 comprises repeating cycles of a first plurality 201 of frequency ramps r₁ and a second plurality 202 of frequency ramps r₂, where each radar cycle has a duration of a cycle time t_{c}. In this context, a radar cycle is one observation phase during which the vehicle radar system 110 is arranged to acquire data, process said data on several signal processing levels and to send out available results. This can be a fixed time interval or a dynamic time interval depending on environment conditions and processing load.

Each ramp r₁, r₂ lasts a certain ramp time tᵣ, between two consecutive ramps there is the ramp time tᵣ and a delay time t_{D} that together form a total ramp time t_{T}.

The present disclosure is not limited to FMCW radar waveforms. Rather, the disclosed concepts and techniques can be applied to many different radar waveforms. In particular, the techniques disclosed herein are applicable to Orthogonal Frequency Division Multiplex (OFDM) radar, and to Pulse Modulated Continuous Wave (PMCW) radar. One example of OFDM radar is the stepped OFDM radar waveform described in EP3324201 A1.

Each radar transceiver 130a, 130b is associated with a corresponding field of view 135a, 135b. As exemplified for the second corner radar transceiver 135b, a boresight direction 137 of a corner radar transceiver 135b often coincides with a center line of the field of view 135b that points at an angle α compared to a forward direction F of the vehicle 100. For a front center radar transceiver (not shown), a boresight direction normally coincides with the forward direction F of the vehicle 100.

Radar transceivers 130a, 130b can for example be mounted behind a body part of the vehicle 100. This vehicle body part may be, e.g., a front bumper 150 or a rear bumper (not shown) as well as a separate radome, a grille and/or vehicle logo.

In the following, a corner radar transceiver 130 will be discussed, and it is to be understood that the features discussed are applicable for any corner radar transceiver 130a, 130b, as well as for or any other radar transceiver.

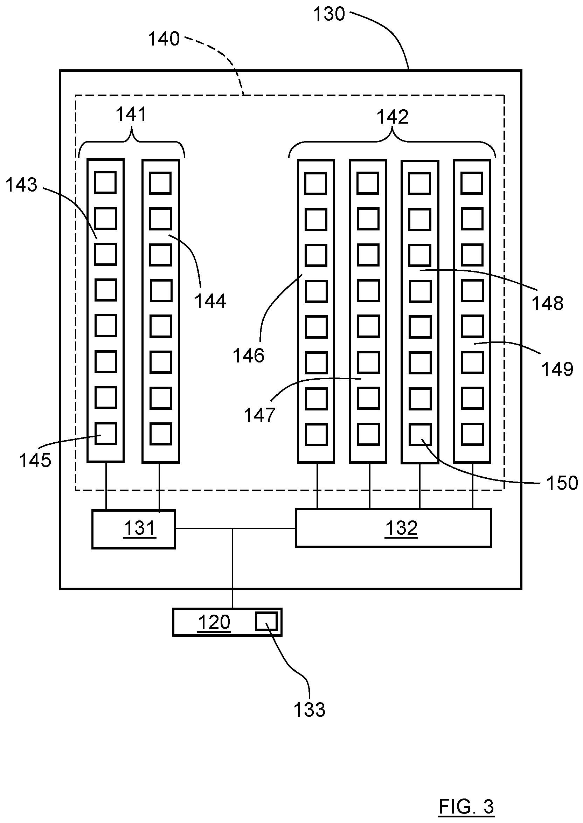

With reference to Figure 3, the radar transceiver 130 comprises an antenna arrangement 140, a transmitter unit 131 and a receiver unit 132 that are connected to each other, to the antenna arrangement 140 and to the control unit 120. The control unit 120 comprises a radar control unit 133 that in turn comprises digital signal processing ability.

The antenna arrangement 140 comprises a controllable transmitter antenna arrangement 141 and a receiver antenna arrangement 142. According to some aspects, the transmitter antenna arrangement 141 comprising a first transmitter antenna column 143 and a second transmitter antenna column 144, each transmitter antenna column 143, 144 comprising a plurality of antenna elements 145. According to some further aspects, the receiver antenna arrangement 142 comprising a first receiver antenna column 146, a second receiver antenna column 147, a third receiver antenna column 148, and a fourth receiver antenna column 149, each receiver antenna column 146, 147, 148, 149 comprising a plurality of antenna elements 150.

In order to enable the transmitter antenna arrangement 141 to be controllable, it should comprise at least two transmitter antenna columns, according to some aspects spaced apart by a half wavelength at the operating frequency band, the antenna columns being adapted to transmit more or less simultaneously. According to some aspects, the transmitter unit 131 is adapted to configure individual phase shifts and power back-off values, possibly being controlled by the control unit 120.

Generally, the receiver antenna arrangement 142 normally comprises a plurality of receiver antenna columns.

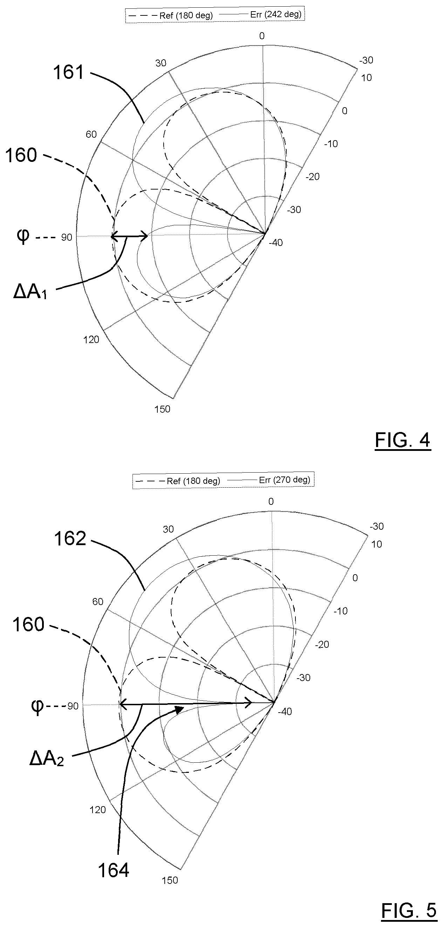

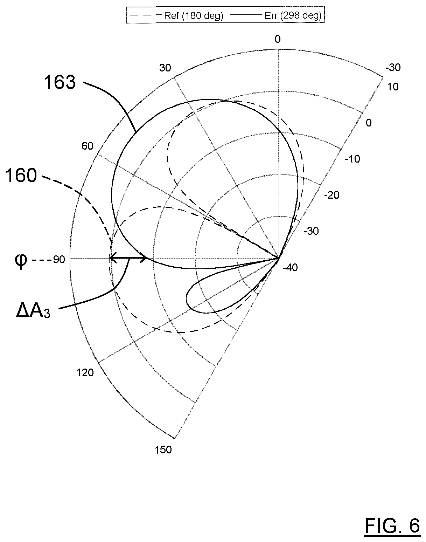

The control unit 120 is adapted to control the radar transceiver 130 to generate and transmit a radar signal 124, and to receive a reflected radar signal 125 that corresponds to the transmitted radar signal 127 being reflected by one or more target objects 126. With reference also to Figure 4-6, for a calibration process, the control unit 120 is adapted to control the transmitter antenna arrangement 141 to generate a first antenna radiation pattern 160 for the transmitted radar signal 124, and to control the transmitter antenna arrangement 141 to generate a plurality of second antenna radiation patterns 161, 162, 163 for the transmitted radar signal 124.

In Figure 4-6 the antenna radiation patterns 160, 161, 162, 163 are shown in a tilted manner due to the radar transceiver being a corner radar transceiver 130.

According to some aspects, during the calibration process, the control unit 120 is adapted to control the radar transceiver 130 to transmit the radar signal 124 using the first antenna radiation pattern 160 for the first plurality 201 of FMCW ramps r₁, and to transmit the radar signal 124 using the second antenna radiation patterns 162 for the second plurality 202 of FMCW ramps r₂.

According to some aspects, the first antenna radiation pattern 160 will always be transmitted with the same antenna configuration; a constant phase shift and power back-off values being applied to the transmitter antenna columns 143, 144 by the transmitter unit 131. For the second antenna radiation patterns 161, 162, 163, the phase shift and power back-off values that are applied to the transmitter antenna columns 143, 144 by the transmitter unit 131 are altered in set time intervals during a calibration process.

In a predetermined angular direction φ with respect to a predefined reference direction such as for example a vehicle boresight direction that corresponds to the forward direction F or an antenna boresight direction 137, the control unit 120 is further adapted to determine which second antenna radiation pattern 162 provides the largest amplitude difference ΔA₂ of the received reflected signal 125 between the first antenna radiation pattern 160 and the second antenna radiation patterns 161, 162, 163, and to choose that second antenna radiation pattern 162.

In this manner, by determining a chosen second antenna radiation pattern 162, the calibration process has been completed. The calibration process is normally independent of the environment, which is an advantage. According to some aspects, the largest amplitude difference ΔA₂ corresponds to a notch 164 at the chosen second antenna radiation pattern 162 in the predetermined angular direction φ. This possibility is illustrated in Figure 5.

The chosen second antenna radiation pattern 162 can now be used during normal operation. This means that the control unit 120 is adapted to control the transmitter antenna arrangement 141 to generate the chosen second antenna radiation pattern 162 and the first antenna radiation pattern 160 in an alternating manner.

In this context, according to some aspects, the first antenna radiation pattern 160 is of a first type, and the second antenna radiation patterns 161, 162, 163 are of a second type. According to some further aspects, the second type is a delta pattern type, which means that there is a distinct amplitude dip at a certain angle, dividing each second antenna radiation pattern 161, 162, 163 into two more or less symmetrical parts. In Figure 5, the amplitude dip is positioned at the predetermined angular direction φ of 90°.

The first antenna radiation pattern 160 can be of any suitable type, but should preferably not have any distinct amplitude dip at the predetermined angular direction φ. The first antenna radiation pattern 160 does not need to have any distinct amplitude dip at all, in the present example with reference to Figure 4-6 the first antenna radiation pattern 160 has a distinct amplitude dip at about 60°. For the first antenna radiation pattern 160 this is in the middle of the field of view (FOV), which maximizes the energy transmitted at the edges of the FOV.

According to some aspects, during normal operation after calibration, the control unit 120 is adapted to control the radar transceiver 130 to transmit the radar signal 124 using the first antenna radiation pattern 160 for the first plurality 201 of FMCW ramps r₁, and to transmit the radar signal 124 using the chosen second antenna radiation pattern 162 for the second plurality 202 of FMCW ramps r₂.

This means that the present disclosure can be applied to a dual-mode radar system, which applies time-division multiplexing to sense the environment with two different modes, a first mode for the first antenna pattern 160 and a second mode for the chosen second antenna radiation pattern 162.

According to some aspects, one of a first plurality 201 of FMCW ramps r₁ and a second plurality 202 of FMCW ramps r₂ follow after the other. According to some further aspects, during one or more radar cycles, the chirp signal 124 comprises repeating cycles of the first plurality 201 of frequency ramps r₁ and the second plurality 202 of frequency ramps r₂. These cycles can thus be sub-cycles in a radar cycle, or correspond to a radar cycle.

This means that the first plurality 201 of FMCW ramps r₁ and the second plurality 202 of FMCW ramps r₂ can come in any order. This is the case for the calibration process as well as for the normal operation after calibration.

Furthermore, according to some aspects, during the calibration process, one or more sets of a first antenna radiation pattern 160 and one second antenna radiation pattern 161, 162, 163 can be generated in one and the same radar cycle. This can be accomplished in one radar cycle or distributed in several radar cycles. These sets thus result in that the first antenna radiation pattern 160 is repeatedly generated before each second antenna radiation pattern 161, 162, 163 is generated.

According to some further aspects, during the calibration process, one first antenna radiation pattern 160 is followed by all second antenna radiation pattern 161, 162, 163. This can be accomplished in one radar cycle or distributed in several radar cycles.

According to some aspects, the control unit 120 is adapted to control the transmitter antenna arrangement 141 to generate each second antenna radiation pattern 161, 162, 163 during a certain time interval when transmitting the radar signal 124.

In this way, a controlled calibration procedure is obtained.

According to some aspects, when the control unit 120 is determining which second antenna radiation pattern 162 provides the largest amplitude difference ΔA₂ between the first antenna radiation pattern 160 and the second antenna radiation patterns 161, 162, 163, the control unit 120 is adapted to measure amplitudes of received reflected radar signals 125, and to compare amplitudes of received reflected radar signals 125 that correspond to when the first antenna radiation pattern 160 is used for the transmitted radar signal 124 with amplitudes of received reflected radar signals that correspond to when second antenna radiation patterns 161, 162, 163 are used for the transmitted radar signal 124. The control unit 120 is further adapted to determine which second antenna radiation pattern 161, 162, 163 is used when a difference ΔA₁, ΔA₂, ΔA₃ between the compared amplitudes is maximal.

This means that radar targets 126 in the azimuth area of interest, i.e., a field of view 135a, 135b or a certain predetermined optimization azimuth angle φ, are selected, and their received amplitudes are analyzed.

For the first antenna radiation pattern 160 and the different second antenna radiation patterns 161, 162, 163, the amplitudes of the received reflected signal 125 are compared, such that at an ideal notch position for the chosen second antenna radiation pattern 162, at the predetermined angular direction φ, the amplitude ratio has reached a maximum. This comparison is independent of the targets' reflective properties, since the same selected targets 126 are used. According to some aspects, a systematic beamsteering sweep can be used for the transmitted radar signal 124 to find the ideal notch position for the second antenna radiation pattern 161, 162, 163.

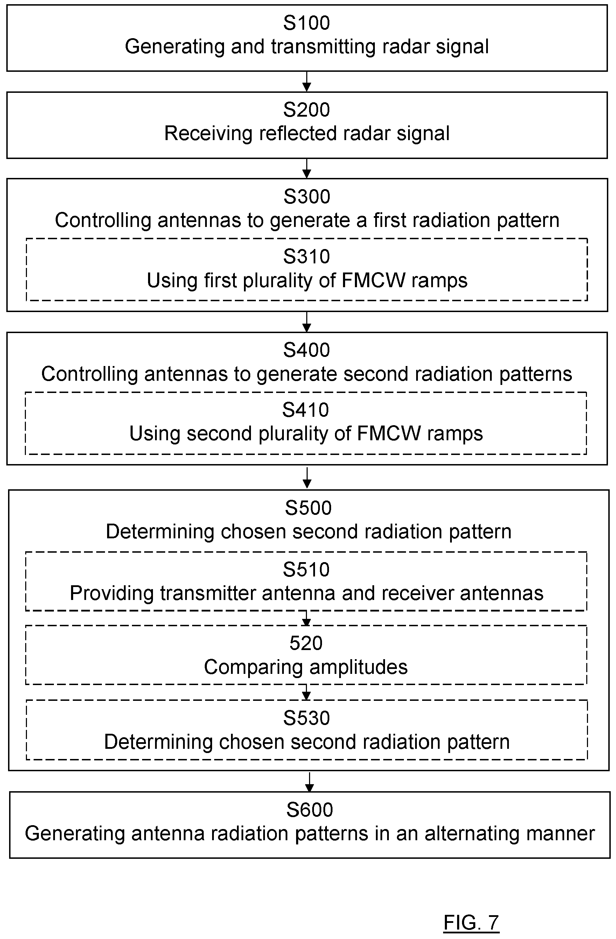

With reference to Figure 7, the present disclosure relates to a method for calibrating and operating a radar transceiver 130 used in a vehicle radar system 110 that is mounted to a vehicle 100, where the radar transceiver 130 comprises a controllable transmitter antenna arrangement 141 and a receiver antenna arrangement 142. The method comprises generating and transmitting S100 a radar signal 124, and receiving S200 a reflected radar signal 125 that corresponds to the transmitted radar signal 124 being reflected by one or more target objects 126.

The method further comprises controlling S300 the transmitter antenna arrangement 141 to generate a first antenna radiation pattern 160 for the transmitted radar signal 124; and controlling S400 the transmitter antenna arrangement 141 to generate a plurality of second antenna radiation patterns 161, 162, 163 for the transmitted radar signal 124.

The method further comprises, in a predetermined angular direction φ with respect to a predefined reference direction 137, F, determining S500 which second antenna radiation pattern 162 provides the largest amplitude difference ΔA₂ of the received reflected signal 125 between the first antenna radiation pattern 160 and the second antenna radiation patterns 161, 162, 163, and choosing that second antenna radiation pattern 162, and controlling S600 the transmitter antenna arrangement 141 to generate the chosen second antenna radiation pattern 162 and the first antenna radiation pattern 160 in an alternating manner.

The predefined reference direction 137 can for example be a vehicle boresight direction that corresponds to the forward direction F or an antenna boresight direction 137.

According to some aspects, the method further comprises using radar signals 124 in the form of frequency modulated continuous wave, FMCW, ramps. For each radar cycle, the method comprises transmitting S310 the radar signal 124 using the first antenna radiation pattern 160 for a first plurality 201 of FMCW ramps r₁, and transmitting S410 the radar signal 124 using the second antenna radiation pattern 161, 162, 163 for a second plurality 202 of FMCW ramps r₂. Each radar cycle has a duration of a cycle time t_{c}.

According to some aspects, one of a first plurality 201 of FMCW ramps r₁ and a second plurality 202 of FMCW ramps r₂ follow after the other.

According to some aspects, during one or more radar cycles, the chirp signal 124 comprises repeating cycles of the first plurality 201 of frequency ramps r₁ and the second plurality 202 of frequency ramps r₂.

According to some aspects, each second antenna radiation pattern 161, 162, 163 is used during a certain time interval when transmitting the radar signal 124.

According to some aspects, the determining S500 of which second antenna radiation pattern 162 provides the largest amplitude difference ΔA₂ between the first antenna radiation pattern 160 and the second antenna radiation patterns 161, 162, 163 further comprises measuring S510 amplitudes of received reflected radar signals 125, and comparing S520 amplitudes of received reflected radar signals 125 that correspond to when the first antenna radiation pattern 160 is used for the transmitted radar signal 124 with amplitudes of received reflected radar signals that correspond to when second antenna radiation patterns 161, 162, 163 are used for the transmitted radar signal 124. The determining S500 further comprises determining S530 which second antenna radiation pattern 161, 162, 163 is used when a difference ΔA₁, ΔA₂, ΔA₃ between the compared amplitudes is maximal.

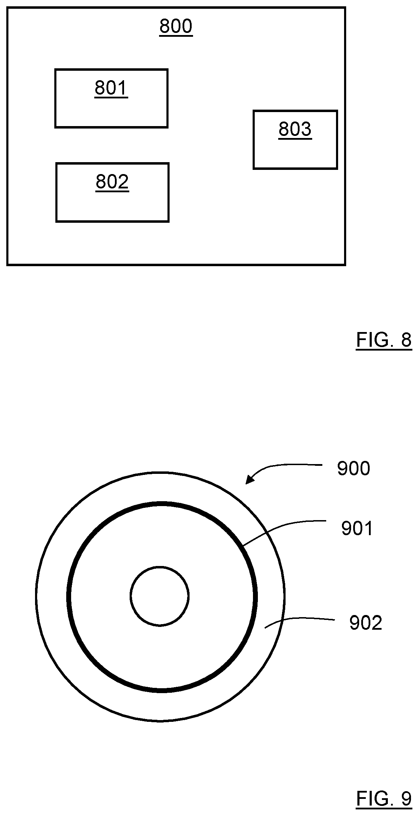

Figure 8 schematically illustrates a control unit arrangement 800, such as the control unit 120 according to the above and according to aspects of the present disclosure. It is appreciated that the above described methods and techniques may be realized in hardware. This hardware is then arranged to perform the methods, whereby the same advantages and effects are obtained as have been discussed above.

Processing circuitry 801 is provided using any combination of one or more of a suitable central processing unit (CPU), multiprocessor, microcontroller, digital signal processor (DSP), etc., capable of executing software instructions stored in a computer program product, e.g. in the form of a storage medium 802. The processing circuitry 801 may further be provided as at least one application specific integrated circuit (ASIC), or field programmable gate array (FPGA).

Particularly, the processing circuitry 801 is configured to cause the control unit arrangement 800 to perform a set of operations, or steps, for example the methods described above. For example, the storage medium 802 may store the set of operations, and the processing circuitry 801 may be configured to retrieve the set of operations from the storage medium 802 to cause the control unit arrangement 3 to perform the set of operations. The set of operations may be provided as a set of executable instructions. Thus, the processing circuitry 801 is thereby arranged to execute methods as herein disclosed.

The storage medium 802 may also comprise persistent storage, which, for example, can be any single one or combination of magnetic memory, optical memory, solid state memory or even remotely mounted memory.

The control unit arrangement 3 may further comprise a communications interface 803 for communications with at least one external device such as for example radar transceivers. As such the communication interface 803 may comprise one or more transmitters and receivers, comprising analogue and digital components and a suitable number ports for wireline or wireless communication.

The processing circuitry 801 controls the general operation of the control unit arrangement 3, e.g. by sending data and control signals to the communication interface 803 and the storage medium 802, by receiving data and reports from the communication interface 803, and by retrieving data and instructions from the storage medium 802. Other components, as well as the related functionality, of the unit are omitted in order not to obscure the concepts presented herein.

Figure 9 schematically illustrates a computer program product 900 comprising a computer program 901 according to the disclosure above, and a computer readable storage medium 902 on which the computer program 901 is stored.

The present disclosure is not limited to the examples described above, but may vary freely within the scope of the appended claims. For example, although the above description mainly has been directed towards corner radar transceivers 130a, 130b and exemplified for front corner radar transceivers 130a, 130b, the present disclosure can be applied for any radar transceiver such as front, side and rear radar transceivers, and for any combination of radar transceivers.

The control unit 120 is part of the radar system 110 and can, but does not need to, be part of one or more radar transceivers. According to some aspects, when the control unit 120 is part of a radar transceiver and is adapted to control a radar transceiver, this is to be interpreted as the control unit 120 being adapted to control the rest of that radar transceiver.

## Claims

1. A method for calibrating and operating a radar transceiver (130) used in a vehicle radar system (110) that is mounted to a vehicle (100), the vehicle radar system (110) further comprising a control unit (120) for controlling the radar transceiver (130), where the radar transceiver (130) comprises a controllable transmitter antenna arrangement (141) and a receiver antenna arrangement (142), where the method comprises
generating and transmitting (S100) a radar signal (124);
receiving (S200) a reflected radar signal (125) that corresponds to the transmitted radar signal (124) being reflected by one or more target objects (126); wherein, the method further comprises;
controlling (S300), by the control unit (120), the transmitter antenna arrangement (141) to generate a first antenna radiation pattern (160) for the transmitted radar signal (124);
controlling (S400), by the control unit (120), the transmitter antenna arrangement (141) to generate a plurality of second antenna radiation patterns (161, 162, 163) for the transmitted radar signal (124);
**characterized in that** the method further comprises in a predetermined angular direction (φ) with respect to a predefined reference direction (F, 137), determining (S500), by the control unit (120), which second antenna radiation pattern (162) provides the largest amplitude difference (ΔA₂) of the received reflected signal (125) between the first antenna radiation pattern (160) and the second antenna radiation patterns (161, 162, 163), and choosing that second antenna radiation pattern (162); and
controlling (S600), by the control unit (120), the transmitter antenna arrangement (141) to generate the chosen second antenna radiation pattern (162) and the first antenna radiation pattern (160) in an alternating manner.

2. The method according to claim 1, wherein the method further comprises using radar signals (124) in the form of frequency modulated continuous wave, FMCW, ramps, where, for each radar cycle, the method comprises:
transmitting (S310) the radar signal (124) using the first antenna radiation pattern (160) for a first plurality (201) of FMCW ramps (r₁); and
transmitting (S410) the radar signal (124) using the second antenna radiation pattern (161, 162, 163) for a second plurality (202) of FMCW ramps (r₂),
where each radar cycle has a duration of a cycle time (t_{c}).

3. The method according to claim 2, wherein one of a first plurality (201) of FMCW ramps (r₁) and a second plurality (202) of FMCW ramps (r₂) follow after the other.

4. The method according to any one of the claims 2 or 3, wherein during one or more radar cycles, the chirp signal (124) comprises repeating cycles of the first plurality (201) of frequency ramps (r₁) and the second plurality (202) of frequency ramps (r₂).

5. The method according to any one of the previous claims, wherein each second antenna radiation pattern (161, 162, 163) is used during a certain time interval when transmitting the radar signal (124).

6. The method according to any one of the previous claims, wherein the determining (S500) of which second antenna radiation pattern (162) that provides the largest amplitude difference (ΔA₂) between the first antenna radiation pattern (160) and the second antenna radiation patterns (161, 162, 163) further comprises:
measuring (S510) amplitudes of received reflected radar signals (125) in the predetermined angular direction (φ);
comparing (S520) amplitudes of received reflected radar signals (125) that correspond to when the first antenna radiation pattern (160) is used for the transmitted radar signal (124) with amplitudes of received reflected radar signals that correspond to when second antenna radiation patterns (161, 162, 163) are used for the transmitted radar signal (124); and
determining (S530) which second antenna radiation pattern (161, 162, 163) is used when a difference (ΔA₁, ΔA₂, ΔA₃) between the compared amplitudes is maximal.

7. A vehicle radar system (110) that comprises a control unit (120) and a radar transceiver (130) that in turn comprises a controllable transmitter antenna arrangement (141) and a receiver antenna arrangement (142), where the control unit (120) is adapted to control the radar transceiver (130) to
- generate and transmit a radar signal (124), and
- receive a reflected radar signal (125) that corresponds to the transmitted radar signal (124) being reflected by one or more target objects (126),
wherein, the control unit (120) is adapted to
- control the transmitter antenna arrangement (141) to generate a first antenna radiation pattern (160) for the transmitted radar signal (124),
- control the transmitter antenna arrangement (141) to generate a plurality of second antenna radiation patterns (161, 162, 163) for the transmitted radar signal (124),
**characterized in that** the control unit (120) is further adapted to
- in a predetermined angular direction (φ) with respect to a predefined reference direction (F, 137), determine which second antenna radiation pattern (162) provides the largest amplitude difference (ΔA₂) between the first antenna radiation pattern (160) and the second antenna radiation patterns (161, 162, 163), and choose that second antenna radiation pattern (162), and
- control the transmitter antenna arrangement (141) to generate the chosen second antenna radiation pattern (162) and the first antenna radiation pattern (160) in an alternating manner.

8. The vehicle radar system (110) according to claim 7, wherein each vehicle radar transceiver (130a, 130b) is arranged to generate and transmit radar signals (124) in the form of frequency modulated continuous wave, FMCW, signals, where the control unit (120) is adapted to control the radar transceiver (130a, 130b) to transmit the radar signal (124) using the first antenna radiation pattern (160) for a first plurality (201) of FMCW ramps (r₁), and to transmit the radar signal (124) using the second antenna radiation pattern (161, 162, 163) for a second plurality (202) of FMCW ramps (r₂), where each radar cycle has a duration of a cycle time (t_{c}).

9. The vehicle radar system (110) according to claim 8, wherein one of a first plurality (201) of FMCW ramps (r₁) and a second plurality (202) of FMCW ramps (r₂) follow after the other.

10. The vehicle radar system (110) according to any one of the claims 8 or 9, wherein during one or more radar cycles, the chirp signal (124) comprises repeating cycles of the first plurality (201) of frequency ramps (r₁) and the second plurality (202) of frequency ramps (r₂).

11. The vehicle radar system (110) according to any one of the claims 7-10, wherein the control unit (120) is adapted to control the transmitter antenna arrangement (141) to generate each second antenna radiation pattern (161, 162, 163) during a certain time interval when transmitting the radar signal (124).

12. The vehicle radar system (110) according to any one of the claims 7-11, wherein the control unit (120) is adapted to determine which second antenna radiation pattern (162) provides the largest amplitude difference (ΔA₂) between the first antenna radiation pattern (160) and the second antenna radiation patterns (161, 162, 163) by further being adapted to
- measure amplitudes of received reflected radar signals (125) in the predetermined angular direction (φ),
- compare amplitudes of received reflected radar signals (125) that correspond to when the first antenna radiation pattern (160) is used for the transmitted radar signal (124) with amplitudes of received reflected radar signals that correspond to when second antenna radiation patterns (161, 162, 163) are used for the transmitted radar signal (124), and to
- determine which second antenna radiation pattern 161, 162, 163 is used when a difference ΔA₁, ΔA₂, ΔA₃ between the compared amplitudes is maximal.

13. The vehicle radar system (110) according to any one of the claims 7-12, wherein the vehicle radar system (110) comprises at least one transmitter unit (131), where the transmitter antenna arrangement (141) comprises at least two first transmitter antenna columns (143, 144), each transmitter antenna column (143, 144) comprising a plurality of antenna elements (145), and where the transmitter unit (131) is adapted to transmit via the transmitter antenna columns (143, 144) simultaneously.

14. The vehicle radar system (110) according to claim 13, wherein the transmitter unit (131) is adapted to configure individual phase shifts and power back-off values.

15. A vehicle (100) comprising the vehicle radar system (110) according to any one of the claims 7-14.

## Patentansprüche

1. Verfahren zum Kalibrieren und Betreiben eines Radarsendeempfängers (130), der in einem Fahrzeugradarsystem (110), das an einem Fahrzeug (100) montiert ist, verwendet wird, das Fahrzeugradarsystem (110) ferner umfassend eine Steuereinheit (120) zum Steuern des Radarsendeempfängers (130), wobei der Radarsendeempfänger (130) eine steuerbare Sendeantennenanordnung (141) und eine Empfangsantennenanordnung (142) umfasst, wobei das Verfahren umfasst
Erzeugen und Senden (S100) eines Radarsignals (124);
Empfangen (S200) eines reflektierten Radarsignals (125), das dem gesendeten Radarsignal (124), das durch ein oder mehrere Zielobjekte (126) reflektiert wird, entspricht;
wobei, das Verfahren ferner umfasst;
Steuern (S300), durch die Steuereinheit (120), der Sendeantennenanordnung (141), um ein erstes Antennenstrahlungsdiagramm (160) für das gesendete Radarsignal (124) zu erzeugen;
Steuern (S400), durch die Steuereinheit (120), der Sendeantennenanordnung (141), um eine Vielzahl von zweiten Antennenstrahlungsdiagrammen (161, 162, 163) für das gesendete Radarsignal (124) zu erzeugen;
**dadurch gekennzeichnet, dass** das Verfahren ferner umfasst, in einer zuvor bestimmten Winkelrichtung (φ) hinsichtlich einer vorgegebenen Referenzrichtung (F, 137), Bestimmen (S500), durch die Steuereinheit (120), welches zweite Antennenstrahlungsdiagramm (162) die größte Amplitudendifferenz (ΔA₂) des empfangenen reflektierten Signals (125) zwischen dem ersten Antennenstrahlungsdiagramm (160) und den zweiten Antennenstrahlungsdiagrammen (161, 162, 163) bereitstellt, und Wählen dieses zweiten Antennenstrahlungsdiagramms (162); und
Steuern (S600), durch die Steuereinheit (120), der Sendeantennenanordnung (141), um das gewählte zweite Antennenstrahlungsdiagramm (162) und das erste Antennenstrahlungsdiagramm (160) abwechselnd zu erzeugen.

2. Verfahren nach Anspruch 1, wobei das Verfahren ferner ein Verwenden von Radarsignalen (124) in der Form von frequenzmodulierten Dauerstrichrampen, FMCW-Rampen, umfasst, wobei, für jeden Radarzyklus, das Verfahren umfasst:
Senden (S310) des Radarsignals (124) unter Verwendung des ersten Antennenstrahlungsdiagramms (160) für eine erste Vielzahl (201) von FMCW-Rampen (r₁); und
Senden (S410) des Radarsignals (124) unter Verwendung des zweiten Antennenstrahlungsdiagramms (161, 162, 163) für eine zweite Vielzahl (202) von FMCW-Rampen (r₂),
wobei jeder Radarzyklus eine Dauer einer Zykluszeit (t_{c}) aufweist.

3. Verfahren nach Anspruch 2, wobei eine einer ersten Vielzahl (201) von FMCW-Rampen (r₁) und einer zweiten Vielzahl (202) von FMCW-Rampen (r₂) auf die andere folgt.

4. Verfahren nach einem der Ansprüche 2 oder 3, wobei während eines oder mehrerer Radarzyklen, das Chirp-Signal (124) sich wiederholende Zyklen der ersten Vielzahl (201) von Frequenzrampen (r₁) und der zweiten Vielzahl (202) von Frequenzrampen (r₂) umfasst.

5. Verfahren nach einem der vorhergehenden Ansprüche, wobei jedes zweite Antennenstrahlungsdiagramm (161, 162, 163) während eines speziellen Zeitintervalls verwendet wird, wenn das Radarsignal (124) gesendet wird.

6. Verfahren nach einem der vorhergehenden Ansprüche, wobei das Bestimmen (S500), welches zweite Antennenstrahlungsdiagramm (162) die größte Amplitudendifferenz (ΔA₂) zwischen dem ersten Antennenstrahlungsdiagramm (160) und den zweiten Antennenstrahlungsdiagrammen (161, 162, 163) bereitstellt, ferner umfasst:
Messen (S510) von Amplituden empfangener reflektierter Radarsignale (125) in der zuvor bestimmten Winkelrichtung (φ);
Vergleichen (S520) von Amplituden empfangener reflektierter Radarsignale (125), die dem entsprechen, wenn das erste Antennenstrahlungsdiagramm (160) für das gesendete Radarsignal (124) verwendet wird, mit Amplituden empfangener reflektierter Radarsignale, die dem entsprechen, wenn zweite Antennenstrahlungsdiagramme (161, 162, 163) für das gesendete Radarsignal (124) verwendet werden; und
Bestimmen (S530), welches zweite Antennenstrahlungsdiagramm (161, 162, 163) verwendet wird, wenn eine Differenz (ΔA₁, ΔA₂, ΔA₃) zwischen den verglichenen Amplituden maximal ist.

7. Fahrzeugradarsystem (110), das eine Steuereinheit (120) und einen Radarsendeempfänger (130) umfasst, der wiederum eine steuerbare Sendeantennenanordnung (141) und eine Empfangsantennenanordnung (142) umfasst, wobei die Steuereinheit (120) angepasst ist, um den Radarsendeempfänger (130) zu steuern zum
- Erzeugen und Senden eines Radarsignals (124), und
- Empfangen eines reflektierten Radarsignals (125), das dem gesendeten Radarsignal (124), das durch ein oder mehrere Zielobjekte (126) reflektiert wird, entspricht,
wobei die Steuereinheit (120) angepasst ist zum
- Steuern der Sendeantennenanordnung (141) um ein erstes Antennenstrahlungsdiagramm (160) für das gesendete Radarsignal (124) zu erzeugen,
- Steuern der Sendeantennenanordnung (141), um eine Vielzahl von zweiten Antennenstrahlungsdiagrammen (161, 162, 163) für das gesendete Radarsignal (124) zu erzeugen, **dadurch gekennzeichnet, dass** die Steuereinheit (120) ferner angepasst ist zum
- in einer zuvor bestimmten Winkelrichtung (φ) hinsichtlich einer vorgegebenen Referenzrichtung (F, 137), Bestimmen, welches zweite Antennenstrahlungsdiagramm (162) die größte Amplitudendifferenz (ΔA₂) zwischen dem ersten Antennenstrahlungsdiagramm (160) und den zweiten Antennenstrahlungsdiagrammen (161, 162, 163) bereitstellt, und Wählen dieses zweiten Antennenstrahlungsdiagramms (162), und
- Steuern der Sendeantennenanordnung (141), um das gewählte zweite Antennenstrahlungsdiagramm (162) und das erste Antennenstrahlungsdiagramm (160) abwechselnd zu erzeugen.

8. Fahrzeugradarsystem (110) nach Anspruch 7, wobei jeder Fahrzeugradarsendeempfänger (130a, 130b) angeordnet ist, um Radarsignale (124) in der Form von frequenzmodulierten Dauerstrichsignalen, FMCW-Signalen, zu erzeugen und zu senden, wobei die Steuereinheit (120) angepasst ist, um den Radarsendeempfänger (130a, 130b) zu steuern, das Radarsignal (124) unter Verwendung des ersten Antennenstrahlungsdiagramms (160) für eine erste Vielzahl (201) von FMCW-Rampen (r₁) zu senden, und das Radarsignal (124) unter Verwendung des zweiten Antennenstrahlungsdiagramms (161, 162, 163) für eine zweite Vielzahl (202) von FMCW-Rampen (r₂) zu senden, wobei jeder Radarzyklus eine Dauer einer Zykluszeit (t_{c}) aufweist.

9. Fahrzeugradarsystem (110) nach Anspruch 8, wobei eine einer ersten Vielzahl (201) von FMCW-Rampen (r₁) und einer zweiten Vielzahl (202) von FMCW-Rampen (r₂) auf die andere folgt.

10. Fahrzeugradarsystem (110) nach einem der Ansprüche 8 oder 9, wobei während eines oder mehrerer Radarzyklen, das Chirp-Signal (124) sich wiederholende Zyklen der ersten Vielzahl (201) von Frequenzrampen (r₁) und der zweiten Vielzahl (202) von Frequenzrampen (r₂) umfasst.

11. Fahrzeugradarsystem (110) nach einem der Ansprüche 7 bis 10, wobei die Steuereinheit (120) angepasst ist, um die Sendeantennenanordnung (141) zu steuern, um jedes zweite Antennenstrahlungsdiagramm (161, 162, 163) während eines speziellen Zeitintervalls zu erzeugen, wenn das Radarsignal (124) gesendet wird.

12. Fahrzeugradarsystem (110) nach einem der vorhergehenden Ansprüche 7 bis 11, wobei die Steuereinheit (120) angepasst ist, um zu bestimmen, welches zweite Antennenstrahlungsdiagramm (162) die größte Amplitudendifferenz (ΔA₂) zwischen dem ersten Antennenstrahlungsdiagramm (160) und den zweiten Antennenstrahlungsdiagrammen (161, 162, 163) bereitstellt, dadurch, dass sie ferner angepasst ist zum
- Messen von Amplituden empfangener reflektierter Radarsignale (125) in der zuvor bestimmten Winkelrichtung (φ),
- Vergleichen von Amplituden empfangener reflektierter Radarsignale (125), die dem entsprechen, wenn das erste Antennenstrahlungsdiagramm (160) für das gesendete Radarsignal (124) verwendet wird, mit Amplituden empfangener reflektierter Radarsignale, die dem entsprechen, wenn zweite Antennenstrahlungsdiagramme (161, 162, 163) für das gesendete Radarsignal (124) verwendet werden, und zum
- Bestimmen, welches zweite Antennenstrahlungsdiagramm (161, 162, 163) verwendet wird, wenn eine Differenz (ΔA₁, ΔA₂, ΔA₃) zwischen den verglichenen Amplituden maximal ist.

13. Fahrzeugradarsystem (110) nach einem der Ansprüche 7 bis 12, wobei das Fahrzeugradarsystem (110) mindestens eine Sendeeinheit (131) umfasst, wobei die Sendeantennenanordnung (141) mindestens zwei erste Sendeantennenspalten (143, 144) umfasst, jede Sendeantennenspalte (143, 144) umfassend eine Vielzahl von Antennenelementen (145), und wobei die Sendeeinheit (131) angepasst ist, um über die Sendeantennenspalten (143, 144) gleichzeitig zu senden.

14. Fahrzeugradarsystem (110) nach Anspruch 13, wobei die Sendeeinheit (131) angepasst ist, um individuelle Phasenverschiebungen und Leistungs-Back-off-Werte zu konfigurieren.

15. Fahrzeug (100), umfassend das Fahrzeugradarsystem (110) nach einem der Ansprüche 7 bis 14.

## Revendications

1. Procédé d'étalonnage et de fonctionnement d'un émetteur-récepteur de radar (130) utilisé dans un système radar de véhicule (110) qui est monté sur un véhicule (100), le système radar de véhicule (110) comprenant en outre une unité de commande (120) pour commander l'émetteur-récepteur de radar (130), où l'émetteur-récepteur de radar (130) comprend un agencement d'antenne émettrice pouvant être commandé (141) et un agencement d'antenne réceptrice (142), où le procédé comprend
la génération et l'émission (S100) d'un signal radar (124) ;
la réception (S200) d'un signal radar réfléchi (125) qui correspond au signal radar émis (124) réfléchi par un ou plusieurs objets cibles (126) ;
dans lequel le procédé comprend en outre ;
la commande (S300), par l'unité de commande (120), de l'agencement d'antenne émettrice (141) pour générer un premier diagramme de rayonnement d'antenne (160) pour le signal radar émis (124) ;
la commande (S400), par l'unité de commande (120), de l'agencement d'antenne émettrice (141) pour générer une pluralité de seconds diagrammes de rayonnement d'antenne (161, 162, 163) pour le signal radar émis (124) ;
**caractérisé en ce que** le procédé comprend en outre dans une direction angulaire prédéterminée (φ) par rapport à une direction de référence prédéfinie (F, 137), la détermination (S500), par l'unité de commande (120), de quel second diagramme de rayonnement d'antenne (162) fournit la plus grande différence d'amplitude (ΔA₂) du signal réfléchi reçu (125) entre le premier diagramme de rayonnement d'antenne (160) et le second diagramme de rayonnement d'antenne (161, 162, 163), et le choix de ce second diagramme de rayonnement d'antenne (162) ; et
la commande (S600), par l'unité de commande (120), de l'agencement d'antenne émettrice (141) pour générer le second diagramme de rayonnement d'antenne (162) choisi et le premier diagramme de rayonnement d'antenne (160) d'une manière alternée.

2. Procédé selon la revendication 1, dans lequel le procédé comprend en outre l'utilisation de signaux radar (124) sous la forme de rampes à onde entretenue modulée en fréquence, FMCW, où, pour chaque cycle radar, le procédé comprend :
l'émission (S310) du signal radar (124) à l'aide du premier diagramme de rayonnement d'antenne (160) pour une première pluralité (201) de rampes FMCW (r₁) ; et
l'émission (S410) du signal radar (124) à l'aide du second diagramme de rayonnement d'antenne (161, 162, 163) pour une seconde pluralité (202) de rampes FMCW (r₂),
où chaque cycle radar a une durée d'un temps de cycle (t_{c}).

3. Procédé selon la revendication 2, dans lequel l'une parmi une première pluralité (201) de rampes FMCW (r₁) et une seconde pluralité (202) de rampes FMCW (r₂) suivent l'autre.

4. Procédé selon l'une quelconque des revendications 2 ou 3, dans lequel, pendant un ou plusieurs cycles radar, le signal de compression d'impulsions (124) comprend des cycles de répétition de la première pluralité (201) de rampes de fréquence (r₁) et de la seconde pluralité (202) de rampes de fréquence (r₂).

5. Procédé selon l'une quelconque des revendications précédentes, dans lequel chaque second diagramme de rayonnement d'antenne (161, 162, 163) est utilisé pendant un certain intervalle de temps lors de l'émission du signal radar (124).

6. Procédé selon l'une quelconque des revendications précédentes, dans lequel la détermination (S500) de quel second diagramme de rayonnement d'antenne (162) fournit la plus grande différence d'amplitude (ΔA₂) entre le premier diagramme de rayonnement d'antenne (160) et les seconds diagrammes de rayonnement d'antenne (161, 162, 163) comprend en outre :
la mesure (S510) d'amplitudes de signaux radar réfléchis reçus (125) dans la direction angulaire prédéterminée (φ) ;
la comparaison (S520) d'amplitudes de signaux radar réfléchis reçus (125) qui correspondent au moment où le premier diagramme de rayonnement d'antenne (160) est utilisé pour le signal radar émis (124) avec des amplitudes de signaux radar réfléchis reçus qui correspondent au moment où de seconds diagrammes de rayonnement d'antenne (161, 162, 163) sont utilisés pour le signal radar émis (124) ; et
la détermination (S530) de quel second diagramme de rayonnement d'antenne (161, 162, 163) est utilisé lorsqu'une différence (ΔA₁, ΔA₂, ΔA₃) entre les amplitudes comparées est maximale.

7. Système radar de véhicule (110) qui comprend une unité de commande (120) et un émetteur-récepteur de radar (130) qui comprend à son tour un agencement d'antenne émettrice pouvant être commandé (141) et un agencement d'antenne réceptrice (142), où l'unité de commande (120) est conçue pour commander l'émetteur-récepteur de radar (130) pour
- générer et émettre un signal radar (124), et
- recevoir un signal radar réfléchi (125) qui correspond au signal radar émis (124) réfléchi par un ou plusieurs objets cibles (126),
dans lequel l'unité de commande (120) est en outre conçue pour
- commander l'agencement d'antenne émettrice (141) pour générer un premier diagramme de rayonnement d'antenne (160) pour le signal radar émis (124),
- commander l'agencement d'antenne émettrice (141) pour générer une pluralité de seconds diagrammes de rayonnement d'antenne (161, 162, 163) pour le signal radar émis (124), **caractérisé en ce que** l'unité de commande (120) est en outre conçue pour
- dans une direction angulaire prédéterminée (φ) par rapport à une direction de référence prédéfinie (F, 137), déterminer quel second diagramme de rayonnement d'antenne (162) fournit la plus grande différence d'amplitude (ΔA₂) entre le premier diagramme de rayonnement d'antenne (160) et les seconds diagrammes de rayonnement d'antenne (161, 162, 163), et choisir ce second diagramme de rayonnement d'antenne (162), et
- commander l'agencement d'antenne émettrice (141) pour générer le second diagramme de rayonnement d'antenne (162) choisi et le premier diagramme de rayonnement d'antenne (160) d'une manière alternée.

8. Système radar de véhicule (110) selon la revendication 7, dans lequel chaque émetteur-récepteur de radar de véhicule (130a, 130b) est agencé pour générer et émettre des signaux radar (124) sous forme de signaux à onde entretenue modulée en fréquence, FMCW, où l'unité de commande (120) est conçue pour commander l'émetteur-récepteur de radar (130a, 130b) afin d'émettre le signal radar (124) à l'aide du premier diagramme de rayonnement d'antenne (160) pour une première pluralité (201) de rampes FMCW (r₁), et pour émettre le signal radar (124) à l'aide du second diagramme de rayonnement d'antenne (161, 162, 163) pour une seconde pluralité (202) de rampes FMCW (r₂), où chaque cycle radar a une durée d'un temps de cycle (t_{c}).

9. Système radar de véhicule (110) selon la revendication 8, dans lequel l'une parmi une première pluralité (201) de rampes FMCW (r₁) et une seconde pluralité (202) de rampes FMCW (r₂) suivent l'autre.

10. Système radar de véhicule (110) selon l'une quelconque des revendications 8 ou 9, dans lequel pendant un ou plusieurs cycles radar, le signal de compression d'impulsions (124) comprend des cycles répétitifs de la première pluralité (201) de rampes de fréquence (r₁) et de la seconde pluralité (202) de rampes de fréquence (r₂).

11. Système radar de véhicule (110) selon l'une quelconque des revendications 7 à 10, dans lequel l'unité de commande (120) est conçue pour commander l'agencement d'antenne émettrice (141) afin de générer chaque second diagramme de rayonnement d'antenne (161, 162, 163) pendant un certain intervalle de temps lors de l'émission du signal radar (124).

12. Système radar de véhicule (110) selon l'une quelconque des revendications 7 à 11, dans lequel l'unité de commande (120) est conçue pour déterminer quel second diagramme de rayonnement d'antenne (162) fournit la plus grande différence d'amplitude (ΔA₂) entre le premier diagramme de rayonnement d'antenne (160) et les seconds diagrammes de rayonnement d'antenne (161, 162, 163) en étant en outre conçu pour
- mesurer des amplitudes de signaux radar réfléchis reçus (125) dans la direction angulaire prédéterminée (φ),
- comparer des amplitudes de signaux radar réfléchis reçus (125) qui correspondent au moment où le premier diagramme de rayonnement d'antenne (160) est utilisé pour le signal radar émis (124) avec des amplitudes de signaux radar réfléchis reçus qui correspondent au moment où des seconds diagrammes de rayonnement d'antenne (161, 162, 163) sont utilisés pour le signal radar émis (124), et
- déterminer quel second diagramme de rayonnement d'antenne 161, 162, 163 est utilisé lorsqu'une différence ΔA₁, ΔA₂, ΔA₃ entre les amplitudes comparées est maximale.

13. Système radar de véhicule (110) selon l'une quelconque des revendications 7 à 12, dans lequel le système radar de véhicule (110) comprend au moins une unité émettrice (131), où l'agencement d'antenne émettrice (141) comprend au moins deux premières colonnes d'antenne d'émission (143, 144), chaque colonne d'antenne émettrice (143, 144) comprenant une pluralité d'éléments d'antenne (145), et où l'unité émettrice (131) est conçue pour émettre par l'intermédiaire des colonnes d'antenne émettrice (143, 144) simultanément.

14. Système radar de véhicule (110) selon la revendication 13, dans lequel l'unité émettrice (131) est conçue pour configurer des déphasages individuels et des valeurs de réduction de puissance.

15. Véhicule (100) comprenant le système radar de véhicule (110) selon l'une quelconque des revendications 7 à 14.
